# EUROPEAN PATENT APPLICATION

(11) **EP 2 348 440 A2**
(43) Date of publication of application: **27.07.2011**
(21) Application number: 10196307.2
(22) Date of filing: 21.12.2010
(51) Int. Cl.: G06F 21/00

(54) **Collaborative malware detection and prevention on mobile devices**

(30) Priority: 24.12.2009 US 647037
(71) Applicant: Intel Corporation, Santa Clara, CA 95052 (US)
(72) Inventor: Poornachandran, Rajesh, Beaverton, OR 97006 (US); Aissi, Selim, Beaverton, OR 97007 (US)
(74) Representative: Hutchinson, Glenn Stanley

(57) **Abstract**

The present disclosure describes a method and apparatus for collaborative threat detection on mobile devices. A mobile device may comprise a processor, secure memory, and secure circuitry. The processor may be coupled to host memory and may be configured to execute a security threat detection application to detect a malicious program attacking the mobile device. The secure memory may be configured to host a collaborator database comprising data corresponding to at least one collaborating device. The secure circuitry may be configured to determine if the security threat detection application running on the processor is properly operating. If an abnormality in the operation of the security threat detection application is detected, the secure circuitry may be further configured to cause a security threat notification to be transmitted to the collaborating device based on the data in the collaborator database.

## Description

### FIELD

The present disclosure relates to collaborative malware detection and prevention on mobile devices.

### BACKGROUND

With the increasing popularity of mobile devices (e.g., smart telephones and other such wireless devices), more users are utilizing their mobile devices to access more and more different types of services over the Internet. For example, there is a trend towards allowing users to interact with banking services and/or networking sites using mobile devices. However, numerous security concerns arise when a user accesses the Internet using a mobile device. In particular, some websites may include malware and/or spyware which may be configured to capture confidential and/or sensitive information/data stored on and/or entered through a mobile device.

### BRIEF DESCRIPTION OF DRAWINGS

Features and advantages of the claimed subject matter will be apparent from the following detailed description of embodiments consistent therewith, which description should be considered with reference to the accompanying drawings, wherein:
FIG. 1 illustrates one exemplary functional block diagram of a mobile device consistent with the present disclosure;
FIG. 2 illustrates an example of a plurality of mobile devices consistent with the present disclosure coupled to each other and/or a network;
FIG. 3 depicts an exemplary flow chart illustrating establishing communication for collaborative security threat detection and prevention consistent with the present disclosure; and
FIG. 4 depicts an exemplary flow chart illustrating detecting, responding to and/or communicating a security threat consistent with the present disclosure.

Although the following Detailed Description will proceed with reference being made to illustrative embodiments, many alternatives, modifications, and variations thereof will be apparent to those skilled in the art.

### DETAILED DESCRIPTION

Generally, this disclosure describes a secure method and/or system to facilitate collaboration between a plurality of mobile devices for security threat detection, prevention and/or notification. The method is implemented in secure circuitry in each mobile device configured to provide a secure execution environment. Secure memory in each mobile device provides secure storage for applications and/or data associated with security threat detection, prevention and/or notification. The secure circuitry and secure memory are generally inaccessible to "untrusted parties" including the user, operating system, applications and/or malicious programs. Secure circuitry and secure memory are configured to provide protection against software attacks, protection of user secrets and/or secure storage. For example, cryptographic keys may be fused in the secure circuitry and/or secure memory. Secure circuitry is configured to provide a "trusted" computing base, i.e., a secure element on a computing device, that provides trusted/secure execution, storage and/or data channel(s). The method may further include secure communication between devices. For example, communication between devices may be encrypted using cryptographic techniques known to those skilled in the art.

Security threats may include, for example, malicious programs ("malware"), exposure of personal information and/or exposure of critical information. Malware may include virus applications, email viruses, spyware, applications configured to disable anti-virus applications and/or applications configured to mimic a web site, e.g., banking web sites, in order to capture a user's password. Malware may "infect" a mobile device by disabling anti-virus application(s) resident on the mobile device. For example, malware may modify permissions and/or delete files and/or processes necessary for the anti-virus application to function. After the anti-virus application is disabled, malware may then infect the device with a virus.

Mobile devices may be unaware of their "security environment". The mobile devices may be unable to block security threats and/or to prevent spread of a threat by an infected device. Security threat detection and prevention may generally rely on a dedicated management console and/or an administrator configured to monitor and/or take preventive actions. Advantageously, the method and system disclosed herein provide a secure execution environment and/or secure storage configured to allow a plurality of mobile devices to collaborate for security threat detection, prevention and/or notification, without using a dedicated management console and/or administrator.

As used herein, "mobile device" includes any mobile device that is capable of accessing a network, including the Internet, and/or another mobile device. For example, a mobile device may be a "smart phone" configured to provide wireless telephony and/or wireless internet access. In another example, a mobile device may be a "mobile internet device" generally configured to provide wireless internet access in order to provide entertainment, information and/or location-based services for a user. Mobile devices may include "ultra mobile PCs", "Netbooks", notebook computers, and/or other devices known to those skilled in the art. A mobile device may support a variety of web browsers (such as, but not limited to, Internet Explorer™, Mozilla Firefox™, Google Chrome™, Apple Safari™, and Opera™ for Windows™ and Apple Safari™, Mozilla Firefox™ and Opera™ for Macintosh™) and web-based applications, e.g., banking/fmancial applications, social networking, network games, etc.

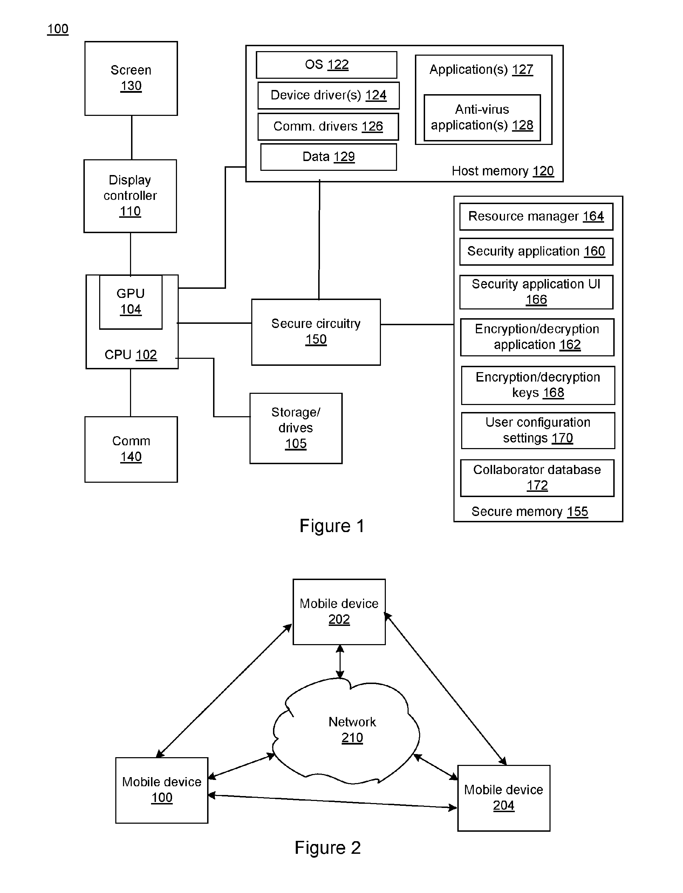

Turning now to Figure 1, one exemplary functional block diagram of a mobile device consistent with the present disclosure is generally illustrated. The mobile device 100 includes a processor ("CPU") 102 coupled to host memory 120. A processor may include one or more core processing units ("cores"). The CPU 102 may include and/or be coupled to a graphics processing unit ("GPU") 104. The CPU 102 and/or GPU 104 may be coupled to a display controller 110. The display controller 110 is coupled to screen 130. The GPU 104 is configured to interface with display controller 110 to generate graphical images for display on screen 130. The display controller 110 is configured to render graphics images to the screen 130. The screen 130 is configured to display graphics received from the display controller 110 to a user and/or may be configured to receive user inputs, e.g., touch. The mobile device 100 may include other storage and/or drives 105 coupled to CPU 102. For example, other storage may include removable media and the like, known to those skilled in the art. In some embodiments, mobile device 100 may include additional user interface(s) configured to receive user input, such as but not limited to a keypad, touchpad and/or keyboard.

The CPU 102 is configured to execute one or more operating systems ("OS") 122, driver(s) and/or application(s) 127 stored in the host memory 120. The driver(s) may include device driver(s) 124 and/or one or more communication driver(s) 126 configured for communication from/to the mobile device 100. For example, each communication driver 126 may be configured to support a particular communication protocol as described herein. Application(s) 127 include at least one security threat detection application 128 (such as, but not limited to, anti-virus application, anti-spyware application, etc.) configured to detect malware. Application(s) 127 may include web browser(s), banking application(s), social networking application(s), and/or other application(s) known to those skilled in the art. The host memory 120 is further configured to store data 129 associated with the application(s) 127 for the mobile device 100. For example, data 129 may include virus signatures associated with anti-virus application 128.

The CPU 102 is further coupled to a communications system ("Comm") 140. The communications system 140 is configured to provide communication between the mobile device 100, a network and/or other mobile devices. For example, Comm 140 may include a transmitter and a receiver (e.g., but not limited to, a transceiver) configured for wireless communication from/to the mobile device to/from the network and/or to/from other mobile devices. Comm 140 may include one or more adapters (not shown) configured for communication. Each adapter may be configured to communicate using an associated communication protocol including, but not limited to, WiFi, 3G, WiMax, Bluetooth, NFC (Near Field Communication), and/or other protocols known to those skilled in the art. The communication may be encrypted and may include encryption protocols such as, but not limited to, DES (Data Encryption Standard), AES (Advanced Encryption Standard), WAP (Wireless Application Protocol), WEP (Wired Equivalent Privacy), and/or other encryption protocols known to those skilled in the art. Comm 140 may be configured to provide global positioning, i.e., GPS (Global Positioning System), which may be used to locate potential collaborating device(s).

The mobile device 100 includes secure circuitry 150 coupled to secure memory 155. In some embodiments, secure circuitry 150 may include secure memory 155. The secure memory 155 may include, for example, direct memory access (DMA). The secure circuitry 150 is coupled to CPU 102 and host memory 120. Secure circuitry 150 is configured to provide a secure execution environment, and secure memory 155 is configured to provide secure storage for applications associated with security functions executed by the secure circuitry 150. For example, security functions include security application 160, encryption/decryption application 162, resource manager 164 and/or security application user interface ("UI") 166. Security application 160 is configured to provide security threat detection, prevention and/or communication. Encryption/decryption application 162 is configured to provide encryption/decryption services for, e.g., communication between mobile device 100 and a network and/or other mobile devices. The resource manager 164 is configured to facilitate and/or schedule applications executing in the secure circuitry 150. The security application UI 166 is configured to provide an interface between a user and security application 160.

The secure memory 155 is configured to provide secure storage for data associated with the security functions which are executed by the secure circuitry 150. For example, secure memory 155 is configured to store key(s) 168 for encryption/decryption application 162. The secure memory 155 may be configured to store user configuration settings 170 which may include one or more actions to be taken in response to detection of malware. For example, responses include isolating mobile device 100 from a network and/or other mobile device(s) (e.g., by disconnecting any communication links with the network and/or other mobile devices), removing malware from mobile device 100, disabling specific functions and/or assets of mobile device 100, halting one or more processes running on mobile device 100 associated with the malware, notifying collaborator(s) and/or notifying local and/or remote system administrator(s). User configuration settings 170 may be initialized by a provider of the mobile device 100 and may be changed in cooperation with an administrator. In order to preserve security, a user of the mobile device may be prevented from independently changing the user configuration settings 170.

The secure memory 155 is configured to store a collaborator database 172, as described herein. The collaborator database 172 may include collaborator identifiers, security threat detection functions available (i.e., active) in the collaborator and/or communication link data associated with each collaborator. For example, the collaborator database may include, for each collaborator, identifiers corresponding to communication capability, security threat detection capability, collaborator availability, collaborator limitations, collaborator virus signatures including latest update, and/or collaborator history of attacks. Communication link data may include a communication protocol identifier, a channel identifier and/or an encryption protocol identifier.

Turning now to Figure 2, one embodiment of a system 200 including a plurality of mobile devices 100, 202, 204 and a network 210 is generally illustrated. One or more of the mobile device(s) 100, 202, 204 may be coupled to the network 210 and/or one or more other mobile devices 100, 202, 204. Network 210 may include a plurality of other servers and/or a plurality of wired and/or wireless interconnects between the other servers. A plurality of other devices, including other mobile devices, may be coupled to the network 210. The system 200 is configured to provide coupling between a mobile device, e.g., mobile device 100, and one or more other mobile devices 202, 204. The coupling may be provided via network 210 and/or mobile device 100 may be coupled to the one or more other mobile devices 202, 204 without using network 210, i.e., the mobile device 100 may be "directly" coupled to the one or more other mobile devices 202, 204.

Secure circuitry 150, secure memory 155, the security functions and data are configured to provide collaboration between each of the collaborating mobile devices 100, 202, 204 in security threat detection, prevention and/or communication. For example, a "local" mobile device, e.g., mobile device 100, may establish secure communication link(s) with one or more collaborators (e.g. collaborating mobile device 202). The local mobile device 100 and the collaborating mobile device 202 may establish one or more communication link(s) configured to provide secure communication between mobile device 100 and the collaborating mobile device 202 for transmitting information regarding a security threat on either device 100, 202. For example, local mobile device 100 may detect a security threat in itself. In particular, security application 160 running on the secure circuitry of local mobile device 100 may monitor an anti-virus application 128 to determine if an abnormality is detected. "Abnormality" includes a security threat (e.g., a virus) present in the mobile device and/or a security threat detection application 128 (e.g., anti-virus application) not operating or not operating properly. For example, a "heart-beat" communication may be implemented between the anti-virus application 128 and the security application 160 to provide a signal from the anti-virus application 128 to the security application 160 at a predetermined time interval, when the anti-virus application 128 is executing. If the security application 160 does not receive the signal, the anti-virus application 128 may not be operating properly. In another example, the security application 160 may provide a query to the anti-virus application 128 that includes a particular signature. The anti-virus application 128 may be configured to provide a predetermined response to this signature. If the security application 160 does not receive an appropriate response, the anti-virus application 128 may not be operating properly. The signature may be stored in secure memory. In another example, the security application 160 may be configured to host a secure execution environment for the anti-virus application 128, i.e., the anti-virus application may execute in the secure environment.

If an abnormality is detected, local mobile device 100 may notify one or more collaborators listed in the collaborator database 172 of the security threat via the established secure communication link(s). Local mobile device 100 may also respond to the detected security threat in itself by, e.g., removing the security threat, disconnecting existing communication link(s), preventing additional communication links from being established, and/or preventing access to one or more functions of the mobile device 100 to other portions of the mobile device 100 and/or other collaborating mobile devices 202.

The notified collaborating mobile device(s) 202 may also respond to the detected security threat in mobile device 100. For example, a collaborator may disconnect one or more communication links from local mobile device 100 and/or the collaborating mobile device(s) 202 may scan itself to determine whether it detects the security threat in itself. Accordingly, the system 200 is configured to provide collaboration between the plurality of mobile devices 100, 202, 204 for security threat detection, prevention and/or communication.

Monitoring the security threat detection application by the security application 160 may provide a measure of confidence regarding the accuracy of detection results from the security threat detection application 128. For example, if the security threat detection application 128 is operating properly, security application 160 may detect this and "trust" the detection results, e.g., security threat detected or no security threat detected. If a security threat is detected and the security threat detection application 128 is operating properly, security application 160 may then communicate the detected security threat to collaborating mobile devices based on data stored in its collaborator database. If the security threat detection application 128 is not operating properly, security application 160 may detect this and not "trust" the detection results. The security application 160 may then communicate failure of the security threat detection application 128 to collaborating mobile devices based on data stored in its collaborator database.

Local mobile device 100 may be further configured to ignore notifications of security threats from remote mobile devices not included in collaborator database 172. In other words, local mobile device 100 may be configured to notify and/or, receive notifications from, collaborating mobile devices included in its collaborator database 172. Notifications from other mobile devices not included in its collaborator database may be deemed "untrusted".

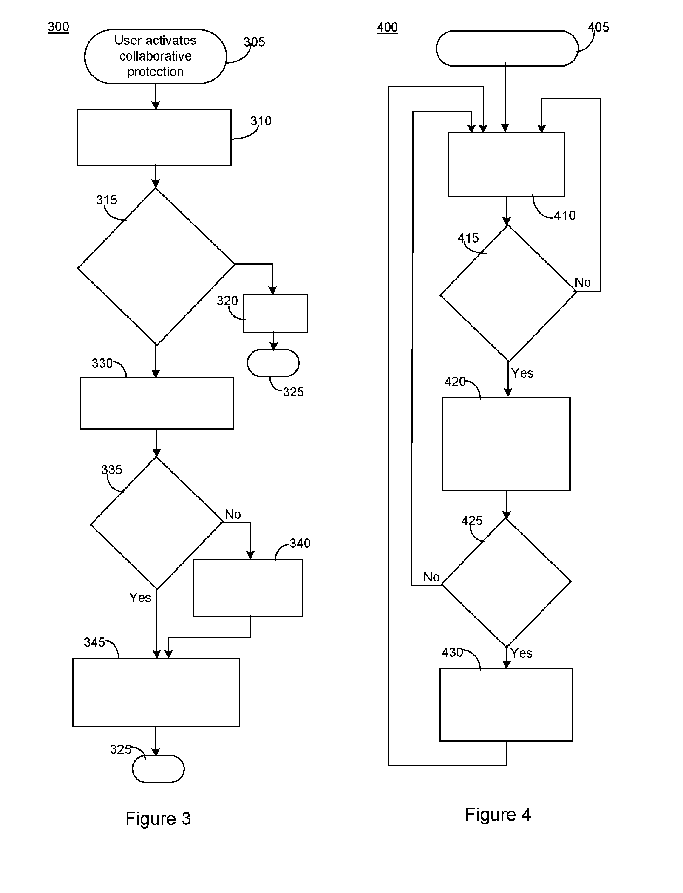

Figure 3 depicts an exemplary flow chart illustrating establishing communication for collaborative security threat detection and prevention consistent with the present disclosure. The operations illustrated in this embodiment may be performed by secure circuitry, e.g., secure circuitry 150, and/or security functions operating therein (e.g., stored in secure memory 155). Flow may begin when collaborative protection is activated, operation 305. For example, a user may activate collaborative protection using security application UI 166. Once activated, the mobile device 100 may scan for collaborators (e.g., mobile devices 202, 204, etc.) interested in collaborative security threat detection, prevention and/or notification, operation 310. For example, scanning may include transmitting, using at least one communication adapter and an associated communication protocol running on Comm 140. According to one embodiment, the scanning may be performed on one or more predetermined communication links rather than all the communication links which Comm 140 is capable of running. Scanning the predetermined communication links may reduce the workload of Comm 140. Scanning may include an identifier corresponding to mobile device100, an indicator of availability of mobile device 100 as a collaborator, one or more identifiers corresponding to security threat detection capability (e.g., an identifier associated with each anti-virus application executing on mobile device 100), available communication protocols in mobile device 100 and/or a request for a reply from potential collaborators (e.g., collaborating mobile devices 202,204).

Whether any collaborators with desired security threat detection capability have replied may be determined at operation 315. For example, a potential collaborator may reply in response to the scanning associated with operation 310. The reply may include an identifier corresponding to the potential collaborator, an indicator of availability of the potential collaborator as a collaborator, one or more identifiers corresponding to security threat detection capability (e.g., an identifier associated with each anti-virus application executing on the potential collaborator and/or available communication protocols in the potential collaborator). Based on the reply, whether the potential collaborator has the desired security threat detection capability may be determined. For example, the mobile device 100 may include a database with a listing of acceptable security threat detection criteria with which the received reply may be compared with the indicator(s) associated with each anti-virus application executing on the potential collaborator to determine if the security threat detection associated with a potential collaborator is acceptable. If there are no replies or no potential collaborator has the desired security threat detection capability, the user may be notified at operation 320. For example, security application UI 166 may be used to provide an indicator to user on screen 130 that no collaborators with the desired security threat detection capability are available. If no collaborators with the desired security threat detection capability are available, flow may then end at operation 325.

If at least one potential collaborator with the desired security threat detection capability replies, operation 330, a communication link may be negotiated with each potential collaborator to determine a communication protocol to be used for communicating regarding security threats. Whether an encryption protocol is to be used may also be negotiated as well as the particular encryption protocol at operation 330.

Operation 335 includes determining whether communication drivers associated with the communication protocols negotiated in operation 330 are loaded. As discussed herein, the scanning 310 may be performed on one or more predetermined communication links. If a communication protocol used for scanning at operation 310 corresponds to a negotiated communication protocol, the communication driver is already loaded. If the communication drivers are loaded, flow may proceed to operation 345. If one or more of the communication driver(s) are not loaded (for example, the communication link to be established for communication of security threat notifications is different than predetermined communication link used for scanning), the communication links associated with the communication protocols negotiated in operation 330 may be loaded at operation 340. For example, the communication driver may be loaded from storage/drives 105 into host memory 120 for execution by CPU 102. In other words, a different communication link (e.g., communication adapter and associated communication protocol) may be negotiated for communicating security threats than was used for scanning.

A database of collaborators with the desired security threat detection capability may be generated/built, operation 345. For each collaborator, the database may include an identifier associated with the collaborator and an associated communication link including the communication adapter and the associated communication protocol. The database may include indicators corresponding to security threat detection capabilities, collaborator availability, collaborator limitations, collaborator virus signatures including latest update, and/or collaborator history of attacks, for each collaborator. The database (e.g., collaborator database 172) may be stored in secure memory 155, operation 345. Flow may then end, operation 325.

In this manner, a mobile device (e.g., local mobile device 100) may scan for collaborators (e.g., mobile devices 202, 204), establish one or more communication links with the collaborators 202, 204 and may build a database of collaborators 172 with the desired security threat detection capability. Mobile device 100 may then collaborate with the collaborators 202, 204 for security threat detection, prevention and/or notification.

Although operation 310 indicates scanning for potential collaborators, the mobile device 100 may also receive a scanning communication from another mobile device (e.g., mobile devices 202, 204) that is scanning for potential collaborators. Mobile device 100 may then reply to the other mobile device 202, 204 as described with respect to operation 315. Mobile device 100 may also update its database of collaborators 172 to include the other mobile device 202, 204. In this manner, a mobile device may scan for collaborators and/or reply to a scan from another mobile device in order to build and/or update its collaborator database 172.

Figure 4 depicts an exemplary flow chart illustrating detecting, responding to and/or communicating a threat consistent with the present disclosure. The operations illustrated in this embodiment, excluding operation 405, may be performed by secure circuitry, e.g., secure circuitry 150, and/or security functions operating therein. Flow begins at operation 405 when security threat detection is activated. For example, an anti-virus application 128 may be installed on a mobile device (e.g., mobile device 100) and may begin execution (e.g., following device power up or the like). Anti-virus application 128 may be executing on CPU 102.

Operation 410 includes monitoring for local and/or remote security threats. Monitoring for local security threats may include monitoring the operation of one or more security threat detection application(s) (e.g., running on host processor 102) to determine if an abnormality is detected during the operation of the security threat detection application (e.g., is properly operating). For example, security application 160 running on secure circuitry 150 may monitor operation of anti-virus application(s) 128. Security application 160 may be configured to determine whether an abnormality is detected during the operation of the anti-virus application 128 (e.g., whether it starts and completes successfully). If the anti-virus application 128 has been disabled and/or corrupted, it may not start and/or it may not complete if it does start. In another example, security application 160 may determine whether an anti-virus application 128 is scanning emails. In this example, security application 160 may monitor email traffic and may determine whether the anti-virus application 128 activates to scan an email and/or whether the scanning completes. If the anti-virus application 128 does not activate and/or does not complete, it may be corrupted and/or disabled by, e.g., malware. For example, to determine whether the anti-virus application is operating properly, a "heart-beat" may be provided between anti-virus application 128 and security application 160 and/or security application 160 may query anti-virus application 128 with a predetermined signature, as described herein. If the "heart-beat" is not received and/or the appropriate response to the predetermined signature is not received, the anti-virus application 128 may not be operating properly, i.e., an abnormality is detected.

Monitoring for remote security threats may include determining whether a security threat notification has been received from a collaborator 202, 204 representing a detected security threat in the collaborator 202, 204. For example, the security threat notification may be transmitted by the collaborator 202, 204 using a negotiated communication link and/or encryption, as described herein. The security threat notification may be received by the corresponding communication adapter in Comm 140 of mobile device 100. Security application 160 may be provided the notification, and if the notification is encrypted, may decrypt it using encryption/decryption application 162 and an appropriate encryption/decryption key 168. The appropriate encryption/decryption key 168 may be indicated based on collaborator database 172, stored in secure memory 155. For example, secure application 160 may select the appropriate key based on a collaborator identifier. Both security application 160 and encryption/decryption application 162 are configured to execute in secure circuitry 150. The security threat notification may include the collaborator identifier, a specific security threat identifier and/or the collaborator's selected response or responses to the security threat.

Whether a local and/or remote security threat has been detected may be determined at operation 415. For example, as described with respect to operation 410, security application 160 may be configured to monitor anti-virus application(s) 128 and/or communication(s) from collaborators 202, 204. Based on this monitoring, security application 160 may then determine whether a security threat has been detected. If no security threats have been detected, flow may return to operation 410 (e.g., monitoring for local and/or remote security threats). If a security threat has been detected (e.g., either a local security threat and/or a remote security threat), flow may proceed to operation 420.

Operation 420 includes responding to a detected security threat. The particular response to the detected security threat taken by the mobile device 100 may depend on user configuration settings 170 stored in secure memory 155. Possible responses include isolating mobile device 100 from the network 210 and/or other mobile devices 202, 204, removing local malware, disabling specific services and/or assets, e.g., communication ports, in mobile device 100, halting one or more applications and/or a specific set of processes that may be executing in CPU 102, notifying a local and/or remote system administrator, reducing privilege levels, and/or other responses as may be known to those skilled in the art.

Operation 425 includes determining whether there are any collaborators 202, 204 to be notified of the detected security threat. For example, security application 160 may determine whether collaborator database 172 includes any active collaborators 202, 204. If there are no active collaborators, flow may return to operation 410 (e.g., monitoring for local and/or remote security threats). If there is at least one collaborator 202, 204, flow may proceed to operation 430 and the collaborator(s) 202, 204 may be notified of the detected security threat. For example, security application 160 may generate a security threat notification for each of the collaborators 202, 204 listed in collaborator database 172. The security threat notification may include an identifier corresponding/representing the mobile device 100, an identifier representing/corresponding to the detected security threat, and/or identifier(s) corresponding to the response(s) to the detected security threat. The security threat notification may be encrypted based on collaborator database 172 and transmitted using the communication link associated with each of the collaborator(s) 202, 204 in collaborator database 172. Flow may then return to operation 410 (e.g., monitoring for local and/or remote security threats). Optionally, a notification may be transmitted after the detected security threat has been fixed. This notification may be transmitted, for example, using the encrypted communication link.

Generally, the system and/or method are configured to facilitate collaboration between a plurality of mobile devices for security threat detection, prevention and/or notification. The system and/or method generally includes identifying potential collaborators, generating a database of the identified collaborators that includes security threat detection capabilities of each collaborator as well as communications data associated with each collaborator. The system and/or method further includes monitoring for local and/or remote security threats, responding to detected security threats and/or communicating the detected threats to collaborators. In this manner, security threats may be detected, communicated and responded to, by a mobile device in collaboration with other mobile device(s) without requiring action by a centralized console and/or network administrator.

While the foregoing is provided as exemplary system architectures and methodologies, modifications to the present disclosure are possible. For example, an operating system in host memory 120 may manage system resources and control tasks that are run on, e.g., CPU 102. For example, the OS may be implemented using Linux™ and/or may be Linux-based, e.g., Moblin™ (Mobile Linux™), Android™ (a mobile operating system running on the Linux™ kernel), Microsoft Windows™ based, e.g., Microsoft Windows CE™, Apple™ Mac-based and/or another operating system designed for use on mobile devices, e.g., Symbian, although other operating systems may be used.

As described herein, communication protocols may include WiFi, 3G, WiMax, Bluetooth, and/or NFC. Other communications protocols may be used. WIFI is a registered trademark of the Wi-Fi Alliance. The WiFi protocol may comply or be compatible with the wireless standard published by the Institute of Electrical and Electronics Engineers (IEEE) titled "IEEE 802.11 Standard", published in 1997, e.g., 802.11a, 802.11b, 802.11g, 802.11n, and/or later versions of this standard. The WiMax protocol may comply or be compatible with the wireless standard published by the IEEE titled "IEEE 802.16 Standard", published in December, 2001, and/or later versions of this standard. The 3G protocol may comply or be compatible with the mobile telecommunication 3GPP specification published by the International Telecommunications Union in 1998, and/or later releases of this specification. The Bluetooth protocol may comply or be compatible with the wireless standard published by the IEEE titled "IEEE 802.15.1-2002", and/or later versions of this standard. The NFC ("Near Field Communication") protocol may comply or be compatible with standards ECMA-340 and ISO/IEC 18092 published by International Electrotechnical Commission of the International Organization for Standardization on December 8, 2003, and/or later versions of these standards.

As described herein, encryption protocols may include DES, AES, WAP, WEP, and/or TLS. Other encryption protocols may be used. The DES protocol may comply or be compatible with the Data Encryption Standard, titled FIPS standard FIPS PUB 46 published by the National Bureau of Standards (now the National Institute of Standards and Technology ("NIST")) in 1976, and/or later versions of this standard. The AES protocol may comply or be compatible with the Advanced Encryption Standard, titled U.S. FIPS PUB 197 (FIPS 197), published by the NIST on November 26, 2001, and/or later versions of this standard. The WAP protocol may comply or be compatible with the Wireless Application Protocol standard, titled "WAP 1.0 Specification Suite", published by the Open Mobile Alliance, April 1998, and/or later versions of this standard. The WEP ("Wired Equivalent Privacy") protocol may comply or be compatible with the IEEE Standard 802.11, and/or later versions of this standard. The TLS (Transport Layer Security) protocol may comply or be compatible with the standard titled "The TLS Protocol Version 1.0", published by the Internet Engineering Task Force "IETF" on January 1999, and/or later versions of this standard.

Other modifications are possible. For example, host memory, e.g., host memory 120 may comprise one or more of the following types of memory: semiconductor firmware memory, programmable memory, non-volatile memory, read only memory, electrically programmable memory, random access memory, flash memory, magnetic disk memory, and/or optical disk memory. In another example, secure memory, e.g., secure memory 155, may comprise one or more of the following types of memory: semiconductor firmware memory, programmable memory, non-volatile memory, read only memory, electrically programmable memory, random access memory and/or flash memory. Either additionally or alternatively, host memory 120 and/or secure memory 155 may comprise other and/or later-developed types of computer-readable memory.

Embodiments of the methods described herein may be implemented in a system that includes one or more storage mediums having stored thereon, individually or in combination, instructions that when executed by one or more processors perform the methods. Here, the processor may include, for example, a processing unit and/or programmable circuitry. Thus, it is intended that operations according to the methods described herein may be distributed across a plurality of physical devices, such as processing structures at several different physical locations. The storage medium may include any type of tangible medium, for example, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMS, erasable programmable read-only memories (EPROMs), electrically erasable programmable read-only memories (EEPROMs), flash memories, magnetic or optical cards, or any type of media suitable for storing electronic instructions.

The Ethernet communications protocol, described herein, may be capable permitting communication using a Transmission Control Protocol/Internet Protocol (TCP/IP). The Ethernet protocol may comply or be compatible with the Ethernet standard published by the Institute of Electrical and Electronics Engineers (IEEE) titled "IEEE 802.3 Standard", published in March, 2002 and/or later versions of this standard.

"Circuitry", as used in any embodiment herein, may comprise, for example, singly or in any combination, hardwired circuitry, programmable circuitry, state machine circuitry, and/or firmware that stores instructions executed by programmable circuitry.

According to one embodiment, the present disclosure may feature an apparatus comprising secure memory and secure circuitry. The secure memory may be configured to host a collaborator database comprising data corresponding to at least one collaborating device. The secure circuitry may be configured to monitor a security threat detection application. If an abnormality is detected during the security threat detection application, the secure circuitry may be further configured to cause a security threat notification to be transmitted to the collaborating device based on the data in the collaborator database.

According to another embodiment, the present disclosure may feature a system comprising a mobile device. The mobile device may comprise a transceiver configured to wirelessly communicate with at least one collaborating device, host memory comprising a security threat detection application, a processor coupled to the host memory and configured to execute the security threat detection application to detect a malicious program attacking the mobile device, secure memory and secure circuitry. The secure memory may be configured to host a collaborator database comprising data corresponding to at least one collaborating device. The secure circuitry may be configured to monitor the operation of the security threat detection application running on the processor. If an abnormality is detected during the operation of the security threat detection application, the secure circuitry may be further configured to cause a security threat notification to be transmitted to the collaborating device based on the data in the collaborator database.

According to yet another embodiment, the present disclosure may feature a method for collaborative threat detection on mobile devices. The method may comprise monitoring, via secure circuitry on a mobile device, for local and remote security threats. Upon identification of a local or remote security threat, performing, via the secure circuitry, corrective action to eliminate the security threat. Upon identification of a local security threat, identifying, via the secure circuitry, at least one collaborating mobile device stored within a collaborator database hosted in secure memory on the mobile device and notifying the collaborating mobile device of the security threat.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents.

Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications.

## Claims

1. An apparatus comprising:
secure memory configured to host a collaborator database comprising data corresponding to at least one collaborating device; and
secure circuitry configured to monitor the operation of a security threat detection application, wherein if an abnormality in the operation of the security threat detection application is detected by the secure circuitry, the secure circuitry is further configured to cause a security threat notification to be transmitted to the at least one collaborating device based on the data in the collaborator database.

2. The apparatus of claim 1, wherein the collaborator database further comprises communication link data associated with each collaborating device, the communication link data comprising at least one of a communication protocol identifier, a channel identifier or an encryption protocol identifier, wherein the secure circuitry is further configured to establish a secure communication link with the at least one collaborating device and to transmit the security threat notification to the at least one collaborating device across the secure communication link.

3. The apparatus of either of claims 1 and 2, wherein the security threat detection application is executing on at least one of a host processor or the secure circuitry.

4. The apparatus of any preceding claim, wherein the secure circuitry is further configured to identify a security threat causing the abnormality in the security threat detection application and wherein the security threat notification comprises information representing the identified security threat.

5. The apparatus according to any one of claims 1-4, wherein the secure circuitry is further configured to scan for potential collaborating mobile devices and to determine if the potential collaborating mobile devices comprises a compatible security threat detection application.

6. The apparatus of any preceding claim, wherein upon identification of a potential collaborating device having the compatible security threat detection application, the secure circuitry is further configured to add data to the collaborator database representing the potential collaborating device.

7. The apparatus of any preceding claim, wherein the secure circuitry is further configured to receive a security threat notification from a compromised mobile device and to perform corrective action, wherein the compromised mobile device corresponds to a mobile device listed in the collaborator database.

8. The apparatus of claim 7, wherein the corrective action comprises at least one of disconnecting a communication link between the mobile device and the compromised mobile device, disconnecting a communication link between the mobile device and a network or performing a scan of the mobile device to determine if the security threat detection application is properly operating.

9. A system comprising a mobile device, the mobile device comprising:
an apparatus according to any one of claims 1-8;
a transceiver configured to wirelessly communicate with at least one collaborating device;
host memory comprising an operating system; and
a processor coupled to the host memory, the processor configured to execute the operating system.

10. The system of claim 9, wherein the security threat detection application comprises an anti-virus application.

11. A method for collaborative threat detection on mobile devices, the method comprising:
monitoring, via secure circuitry on a mobile device, for local and remote security threats;
upon identification of a local or remote security threat, performing, via the secure circuitry, corrective action to address the security threat; and
upon identification of a local security threat, identifying, via the secure circuitry, at least one collaborating mobile device stored within a collaborator database hosted in secure memory on the mobile device and notifying the at least one collaborating mobile device of the security threat.

12. The method of claim 11, wherein the method further comprises:
scanning for potential collaborating mobile devices; and
determining if the potential collaborating mobile devices comprises a compatible security threat detection application.

13. The method of either of claims 11 and 12, wherein upon identification of a potential collaborating device having the compatible security threat detection application, the method further comprises adding data to the collaborator database representing the potential collaborating device.

14. The according to any one of claims 11 - 13, wherein the corrective action comprises at least one of disconnecting a communication link between the mobile device and the compromised mobile device or disconnecting a communication link between the mobile device and a network.
